(19) Europäisches Patentamt / European Patent Office / Office européen des brevets

(11) **EP 2 336 945 B1**

(12) **FASCICULE DE BREVET EUROPEEN**

(45) Date de publication et mention
de la délivrance du brevet:
**27.03.2013 Bulletin 2013/13**

(51) Int Cl.:
**G06K 17/00** *(2006.01)* **G06K 7/10** *(2006.01)*
**G06K 7/00** *(2006.01)*

(21) Numéro de dépôt: **10193051.9**

(22) Date de dépôt: **30.11.2010**

(54) **Dispositif de localisation d'objets par communication RFID**

Vorrichtung zur Lokalisierung von Objekten durch RFID-Kommunikation

Device for locating objects by RFID communication

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.12.2009 FR 0905941**

(43) Date de publication de la demande:
**22.06.2011 Bulletin 2011/25**

(73) Titulaire: **Commissariat à l'Énergie Atomique
et aux Énergies Alternatives
75015 Paris (FR)**

(72) Inventeur: **Thomas, Thierry
38760 Varces Allières et Risset (FR)**

(74) Mandataire: **Guérin, Michel
Marks & Clerk France
Conseils en Propriété Industrielle
Immeuble Visium
22, Avenue Aristide Briand
94117 Arcueil Cedex (FR)**

(56) Documents cités:
**WO-A2-2008/045075**

**Description**

L'invention concerne la localisation et l'identification d'objets par l'intermédiaire d'une communication radiofréquence en zone réactive (couplage inductif), sans contact physique, entre un lecteur et une étiquette. Le lecteur émet des données par l'intermédiaire d'une antenne, l'étiquette réagit à cette émission, et le lecteur détecte la réaction de l'étiquette. La manière dont l'étiquette réagit est fonction à la fois de données transmises par le lecteur au cours de l'émission (par exemple des données d'interrogation) et de données propres à l'étiquette (par exemple des données d'identification), de sorte que le lecteur peut identifier l'étiquette.

Ce type de communication fait partie du domaine d'application connu sous l'appellation RFID (de l'anglais Radio Frequency IDentification, ou identification radiofréquence). Elle est utilisée par exemple pour des cartes ou des badges sans contact destinés à autoriser un accès, ou encore des étiquettes d'identification collées sur des objets à identifier.

Dans ce qui suit, on désignera la carte, le badge ou l'étiquette par le mot "étiquette" ou "étiquette RFID", étant entendu que cette appellation ne désigne pas limitativement une forme particulière de ces objets.

La transmission se fait le plus souvent par l'intermédiaire d'un champ magnétique radiofréquence et elle utilise une antenne inductive faisant partie du lecteur et une antenne inductive faisant partie de l'étiquette. Ces antennes peuvent être constituées par une ou plusieurs spires d'un bobinage conducteur intégré à l'étiquette. Ce bobinage est associé à des circuits électroniques destinés à réaliser des fonctions d'accord en fréquence, d'amortissement et d'adaptation d'impédance, et on appellera antenne inductive l'ensemble du bobinage et de ces composants auxiliaires. Ce sont principalement les tensions induites dans les bobinages par le champ magnétique à haute fréquence qui servent à transporter l'information du lecteur vers l'étiquette et réciproquement. Outre l'antenne inductive servant à l'échange d'informations et éventuellement à la réception d'énergie, l'étiquette comporte en général une puce de circuit intégré qui assure la fonction d'analyse des données d'interrogation et la production de la réponse.

Dans ces systèmes, le lecteur envoie en général une porteuse radiofréquence, modulée suivant un protocole de communication pour constituer un signal d'interrogation radiofréquence ; une fréquence typique dans le cas d'étiquettes à antenne inductive est de 13,56 MHz, modulée en amplitude ou en phase ou en fréquence et c'est cette fréquence qu'on mentionnera dans les exemples qui suivent. Le lecteur attend ensuite une réponse ; si une étiquette est présente dans la zone géographique proche du lecteur et si le signal d'interrogation implique une réponse de celle-ci, elle réagit et émet une information en retour vers le lecteur. La réponse peut être l'émission d'une simple identification numérique, ou bien elle peut être plus complexe.

L'étiquette peut être dépourvue de source d'alimentation autonome, et dans ce cas l'énergie qui lui permet d'émettre sa réponse est fournie de manière inductive par le champ magnétique radiofréquence produit par l'antenne du lecteur via l'antenne de l'étiquette ; l'énergie peut même être fournie par le champ magnétique radiofréquence modulé durant les temps de communication du signal d'interrogation, pour des applications de communication à faibles distances (jusqu'à quelques dizaines de centimètres).

L'antenne inductive du lecteur joue de préférence à la fois un rôle d'antenne d'émission de signal et un rôle d'antenne de réception pour détecter une modulation de champ électromagnétique induite par la réponse de l'étiquette. La réponse de l'étiquette est en général établie sous forme d'une modulation d'impédance de son antenne ; en raison du couplage électromagnétique de l'antenne de l'étiquette et de l'antenne du lecteur lorsque l'étiquette est en zone réactive (distance inférieure à un vingtième de la longueur d'onde, où le champ magnétique est principalement de type réactif plutôt que radiatif), cette modulation entraîne une modification de l'impédance de l'antenne du lecteur, telle qu'elle est vue par les circuits du lecteur connectés à cette antenne ; c'est cette modification d'impédance qui permet la détection puis l'analyse de la réponse.

Le lecteur module son signal à fréquence porteuse Fp pendant une durée T pour constituer un signal d'interrogation reconnaissable à destination de l'étiquette ; s'ensuit une deuxième durée T' où le signal à fréquence porteuse Fp du lecteur n'est pas modulé, pour recevoir une réponse d'une étiquette éventuellement présente.

On a déjà proposé dans le passé différents systèmes fonctionnant sur ces principes, pour aider non seulement à l'identification d'objets (par l'intermédiaire d'une étiquette RFID collée sur l'objet) mais aussi à la localisation des objets dans l'espace.

Dans la publication de brevet FR 2 891 980, des étiquettes RFID sont à des positions connues et permettent de localiser un lecteur.

Dans la publication de brevet FR 2 907 950, un lecteur mobile se déplace et identifie des objets munis d'une étiquette lorsqu'il passe à proximité de ces objets. Il connaît sa propre position à tout moment grâce à un système de positionnement par satellite et en déduit la position des objets rencontrés.

Dans la publication US 2008/0278289, des balises produisent un champ magnétique. Une étiquette passant à proximité détecte les niveaux variables de champ magnétique reçu des différentes balises, dépendant de la position relative de l'étiquette par rapport aux balises ; ces niveaux sont envoyés à un lecteur qui en déduit une position de l'étiquette.

Dans la publication de brevet US 2009/0085741, on localise un lecteur RFID par rapport à des étiquettes de positions connues.

Dans la publication de brevet WO 2008/45075, on détecte la position d'un objet pourvu d'une étiquette RFID, par rapport à un réseau d'antennes fixes constituant autant de lecteurs fixes capables de détecter chacun individuellement la présence d'une étiquette mobile. Les circuits de lecture proprement dits sont regroupés en un seul circuit de lecture relié électriquement à chacune des antennes fixes par autant de voies de lecture individuelles (constituées par des connexions électriques directes) qu'il y a d'antennes fixes.

Enfin, dans la publication de brevet WO 2009/034526, on a une matrice d'antennes radiofréquence constituant une antenne à diagramme de rayonnement configurable permettant de focaliser la liaison RFID dans une direction particulière, dans le but de suivre les déplacements tridimensionnels d'un objet portant une étiquette RFID.

La présente invention a pour but de proposer un système de localisation, mais aussi d'identification, d'étiquettes RFID (et non d'un lecteur mobile) plus simple que ceux qui ont été proposés dans le passé.

Selon l'invention, on propose un dispositif de localisation d'objets munis d'une étiquette de type RFID à antenne inductive, le dispositif comprenant un réseau de N étiquettes RFID fixes à antennes inductives (ou marqueurs) placées à des positions connues, N étant un entier supérieur à 1, caractérisé en ce qu'il comporte en outre un lecteur d'étiquettes RFID pourvu d'une antenne inductive de lecture fixe passant à proximité des N antennes des N marqueurs, la configuration de l'antenne inductive de lecture par rapport aux positions des N antennes des N marqueurs étant telle que l'inductance mutuelle entre l'antenne inductive de n'importe quel marqueur et l'antenne inductive de lecture soit nulle. L'activité électrique induite dans n'importe quel marqueur par l'antenne inductive de lecture est de ce fait nulle lorsqu'aucun objet à localiser n'est présent au voisinage du réseau d'antennes fixes, mais elle devient non nulle lorsque l'étiquette RFID d'un objet à localiser est présente au voisinage du marqueur considéré. On peut dire qu'un couplage électromagnétique, pris au sens large, se fait entre l'antenne inductive de lecture et l'antenne de l'étiquette RFID et un couplage électromagnétique se fait entre cette dernière et l'antenne du marqueur, de sorte qu'un couplage électromagnétique résultant se produit entre l'antenne inductive de lecture et le marqueur.

Dans ce qui suit on appellera "marqueur" une étiquette RFID fixe à antenne inductive ; cette définition n'exclut pas que le marqueur comporte éventuellement des éléments autres que ceux qui sont strictement nécessaires au fonctionnement d'une étiquette RFID.

Le lecteur émet par son antenne des interrogations à destination des marqueurs et d'éventuelles étiquettes qui seraient dans le voisinage de cette antenne ; il n'obtient aucune réponse de la part des N marqueurs s'il n'y a pas d'étiquette autre que les marqueurs car le couplage inductif mutuel est nul entre l'antenne du lecteur et celle des marqueurs. Mais si un objet mobile muni d'une étiquette RFID est approché à la fois de l'antenne de lecture et de l'antenne d'au moins un des N marqueurs, une activité électrique est induite par l'antenne de lecture dans l'antenne du marqueur par l'intermédiaire de l'antenne de l'étiquette RFID de l'objet mobile, ce qui revient à dire qu'un couplage électromagnétique s'établit entre l'antenne du marqueur et l'antenne de lecture par l'intermédiaire de l'antenne de l'étiquette mobile. Ce couplage fait que le marqueur va pouvoir répondre au lecteur en donnant son identification unique parmi les N identités de marqueurs. Cette identification d'un marqueur parmi N est une indication de la localisation de l'objet à proximité de ce marqueur. Si l'étiquette de l'objet mobile établit un couplage significatif avec plusieurs marqueurs parmi les N marqueurs, chacun peut envoyer son identification, donnant ainsi également une indication de localisation de l'objet dans une zone où un tel couplage multiple est possible.

On prévoit de préférence que le réseau de marqueurs est organisé en lignes dont le tracé relie les centres des antennes des marqueurs, le réseau définissant des zones situées entre ces lignes, et la localisation comprend la réception de données d'identification de plusieurs marqueurs encadrant une zone dans laquelle est placé l'objet. Le réseau de lignes peut être organisé en un réseau de rangées et colonnes régulièrement réparties, mais ce n'est pas obligatoire.

Le réseau de marqueurs peut être organisé suivant plusieurs voies de lecture indépendantes comprenant chacune une antenne de lecture respective. Les marqueurs sont alors organisés en plusieurs groupes, chaque groupe étant associé à une antenne inductive d'une voie de lecture indépendante respective ; on pourra alors localiser l'objet mobile par rapport aux marqueurs de l'un ou l'autre des groupes si son étiquette RFID introduit un couplage électromagnétique entre un marqueur d'un groupe et l'antenne de lecture ; on pourra aussi localiser l'objet mobile par rapport aux marqueurs des deux groupes à la fois si l'objet mobile introduit un couplage électromagnétique entre deux antennes appartenant à deux groupes différents et les antennes de lecture de ces deux groupes. Les voies de lecture indépendantes peuvent être juxtaposées ou imbriquées l'une dans l'autre. On prévoit que chaque antenne de lecture est en inductance mutuelle nulle avec les antennes des marqueurs du groupe de marqueurs respectif associé à cette antenne de lecture. On prévoit aussi que tous les marqueurs ont leur antenne en inductance mutuelle nulle avec au moins une antenne de lecture, l'antenne de lecture du groupe auquel ils appartiennent. Il est possible qu'un marqueur ait son antenne en inductance mutuelle nulle avec plus d'une antenne de lecture.

La localisation de l'objet est obtenue du fait de l'identification d'un ou plusieurs marqueurs à proximité desquels l'objet est situé. Cette localisation peut se faire directement par déduction de la liste des identifiants obtenus par interrogations successives exécutées par le lecteur par l'intermédiaire de l'antenne de lecture, cette liste d'identifiants contenant l'identifiant de l'étiquette associée à l'objet mobile et les identifiants des marqueurs rendus identifiables par le fait de la présence de l'étiquette mobile.

La localisation de plusieurs objets mobiles sur la base d'une seule liste d'identifiants conduit à des ambiguïtés. Dans le cas de plusieurs voies de lecture indépendantes, l'identification de plusieurs objets devient possible par l'obtention de plusieurs listes d'identifiants, une par voie de lecture.

La localisation de l'objet portant une étiquette peut se faire indirectement par l'intermédiaire du ou des marqueurs qui ont réagi à la présence de l'étiquette mobile. Pour cela, les marqueurs sont dotés de moyens de réception et d'analyse afin d'intercepter les données d'identification de l'étiquette mobile lorsque celle-ci les envoie en réponse au lecteur, les marqueurs retransmettant vers le lecteur les données d'identification de l'étiquette mobile associées à leurs propres données d'identification lorsqu'ils sont sollicités eux-mêmes par une interrogation du lecteur.

Dans le cas de plusieurs objets, les marqueurs peuvent intercepter les identifiants de la ou des étiquettes mobiles avec lesquels ils réagissent. Le lecteur dispose alors, pour établir la localisation des objets, d'une liste des identifiants des étiquettes mobiles et d'une partie des marqueurs, ainsi que de sous-listes d'identifiants d'étiquettes mobiles par marqueur identifié. Les ambiguïtés de localisation de plusieurs objets sont ainsi réduites.

Les configurations des antennes des voies de lecture peuvent délimiter dans un plan des aires se recouvrant en partie, ou au contraire des aires disjointes.

Les marqueurs sont de préférence conçus de manière à pouvoir détecter et analyser les informations d'identification des étiquettes associées aux objets à localiser.

Enfin, on peut prévoir de préférence que le lecteur RFID peut faire des analyses pour différents niveaux de champ radiofréquence.

D'autres caractéristiques et avantages de l'invention apparaîtront à la lecture de la description détaillée qui suit et qui est faite en référence aux dessins annexés dans lesquels :

- la figure 1 représente le principe général de l'invention ;
- la figure 2 représente une configuration d'antenne de lecture différente de celle de la figure 1 ;
- la figure 3 représente le principe d'un ajustement de valeur de l'inductance mutuelle entre une antenne fixe et l'antenne de lecture ;
- la figure 4 représente un dispositif avec deux voies de lecture juxtaposées ;
- la figure 5 représente un dispositif avec deux voies de lecture imbriquées ;
- la figure 6 représente un autre dispositif avec deux voies de lecture imbriquées et des antennes fixes en quinconce ;
- la figure 7 représente le principe de la localisation d'une antenne mobile dans des cases définies par les lignes et colonnes d'un réseau d'antennes fixes.

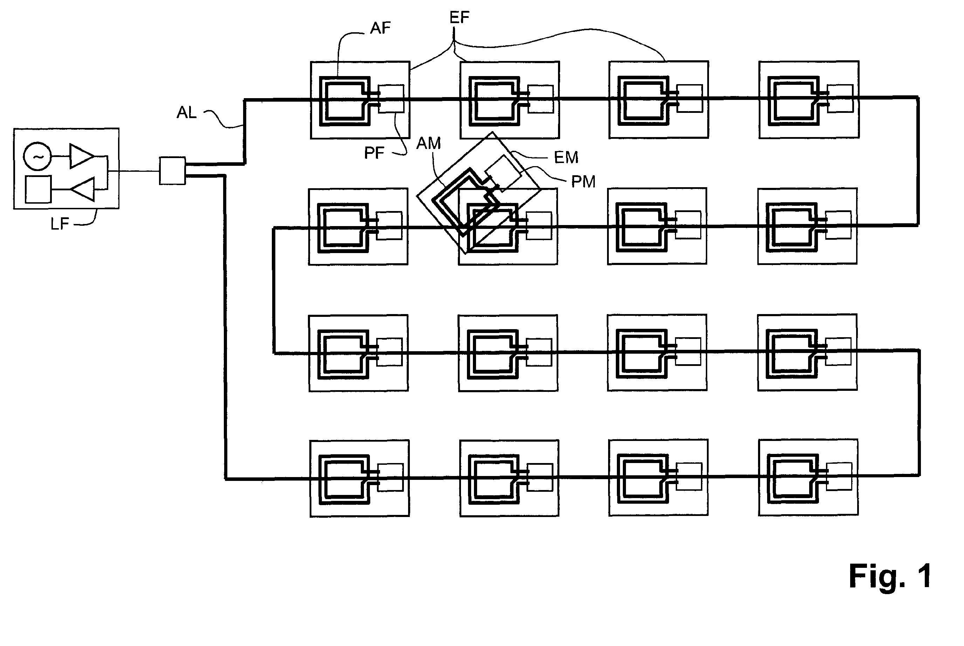

Sur la figure 1, on a représenté un réseau de N étiquettes RFID fixes (dans cet exemple N=16) qu'on appellera par commodité "marqueurs", dont les antennes sont placées à des positions connues les unes par rapport aux autres. Elles sont de préférence disposées aux noeuds d'un maillage régulier en lignes et en colonnes, mais le réseau pourrait être organisé différemment, par exemple le long de cercles concentriques et de rayons régulièrement répartis, ou encore selon un quadrillage de noeuds non régulier si c'est préférable dans l'application considérée. On peut même avoir une seule ligne d'antennes si on recherche une localisation selon une seule dimension. C'est par rapport à ces noeuds du réseau qu'on cherche à déterminer la position d'un objet portant une étiquette RFID qu'on appellera "étiquette mobile".

Les notions de fixe et mobile sont relatives ; ce qui importe c'est la position relative de l'étiquette mobile par rapport au réseau qui est recherchée et non une position absolue ; les marqueurs sont fixes par rapport à la ou les antennes de lecture, l'ensemble pouvant être déplaçable.

Les marqueurs sont désignés par la référence EF (étiquette fixe) ; une étiquette mobile est désignée par la référence EM. A titre d'exemple pratique particulièrement intéressant, les marqueurs sont collés sur un plateau horizontal ou noyés au-dessous de la surface de ce plateau, et une étiquette mobile est collée sous un objet qu'on va poser sur le plateau. Le plateau n'est pas représenté, ni l'objet, mais on voit sur la figure 1 que l'étiquette mobile se superpose sur le réseau de marqueurs.

Le fait que les marqueurs soient représentés exactement comme l'étiquette mobile ne signifie pas pour autant qu'ils sont identiques à l'étiquette mobile, mais l'étiquette mobile et les marqueurs ont en commun le fait qu'ils se comportent comme des étiquettes RFID, à savoir qu'ils peuvent répondre à une interrogation d'un lecteur si le couplage électromagnétique entre le lecteur et l'antenne du marqueur est suffisant. A titre d'exemple d'une différence possible entre les marqueurs et les étiquettes mobiles : on peut prévoir que les marqueurs sont alimentés en énergie par une source d'alimentation fixe liée au plateau, alors que l'étiquette mobile est alimentée soit par une pile (étiquette à alimentation assistée) soit par l'énergie électromagnétique fournie par couplage électromagnétique lors d'une communication RFID (étiquette télé-alimentée).

Les marqueurs comportent une puce de circuit-intégré PF qui incorpore la circuiterie nécessaire à la détection d'une interrogation RFID et à la production d'une réponse incluant une identification du marqueur ; ils comportent également une antenne AF. L'étiquette mobile comprend également une puce de circuit intégré PM et une antenne AM, avec les mêmes fonctionnalités.

Dans le système de localisation selon l'invention, on utilise une communication par l'intermédiaire d'antennes de type inductif qui sont particulièrement bien adaptées pour des fréquences porteuses relativement basses, et notamment une fréquence de 13,56 MHz, utilisée dans certaines normes de communication RFID. Les antennes inductives AM et AF sont constituées par un simple bobinage d'une ou plusieurs spires de fil conducteur formant une boucle capable d'engendrer (en émission) ou de recevoir (en réception) un flux magnétique radiofréquence. Elles sont le plus souvent associées à un condensateur qui permet de constituer avec le bobinage un circuit résonant à une fréquence de travail choisie. Ces condensateurs ne sont pas représentés.

Le dispositif de localisation selon l'invention comporte non seulement le réseau de N marqueurs mais aussi un lecteur RFID fixe (référence LF) avec toutes les fonctionnalités nécessaires à une communication RFID et une antenne inductive AL qui sert à la fois à l'émission de signaux d'interrogation et à la détection de signaux de réponse. L'antenne inductive passe à proximité de tous les marqueurs, mais selon une configuration géométrique telle que l'inductance mutuelle entre l'antenne inductive du lecteur et l'antenne inductive du marqueur soit nulle. En conséquence, l'activité électrique, que l'on qualifiera de couplage électromagnétique (au sens large), induite dans le marqueur par l'antenne inductive de lecture est nulle en l'absence d'étiquette mobile à proximité du réseau de marqueurs ; cette activité est au contraire non nulle lorsque l'étiquette mobile est présente au voisinage du marqueur. Par couplage électromagnétique nul, on entend un couplage aussi proche que possible de zéro et en tous cas un couplage tel que le lecteur ne puisse pas détecter une réponse du marqueur lorsqu'il émet un signal d'interrogation RFID, soit du fait que le marqueur ne détecte tout simplement pas l'interrogation, soit du fait qu'il la détecte mais que sa réponse ne soit pas détectable par l'antenne du lecteur.

L'exemple le plus simple de réalisation permettant que l'inductance mutuelle soit nulle est le suivant : l'antenne du lecteur est un fil conducteur qui passe parallèlement au plan de l'antenne du marqueur et selon un axe de symétrie du bobinage qui constitue l'antenne du marqueur. L'inductance mutuelle nulle repose de manière plus générale sur le fait que lorsqu'un champ magnétique non nul est produit par l'antenne du lecteur, le flux de ce champ magnétique, intégré sur la totalité de la surface de l'antenne du marqueur, doit être nul, un flux positif étant aussi complètement que possible compensé par un flux négatif, et c'est bien le cas lorsque le fil d'antenne du lecteur passe parallèlement au plan du bobinage le long d'un axe de symétrie du bobinage. D'autres moyens que la symétrie sont possibles pour obtenir une inductance mutuelle nulle, par exemple un bobinage auxiliaire générant un flux magnétique de compensation, mais ces moyens sont plus complexes que la simple symétrie.

On voit sur la figure 1 un fil d'antenne de lecteur AL fixe qui forme une boucle complète, et ce fil passe selon un axe de symétrie de toutes les antennes inductives AF des marqueurs EF. Un seul fil est représenté mais on comprendra que le bobinage AL peut comprendre plusieurs spires.

Le lecteur RFID LF est de type classique. Il comprend les circuits nécessaires à l'envoi d'un signal radiofréquence comportant des données d'interrogation, et les circuits de détection d'une réponse de type inductive. Le lecteur comporte aussi des moyens de traitement classiques en RFID qui permettent d'effectuer l'inventaire des numéros d'identification uniques des étiquettes RFID en couplage électromagnétique avec son antenne, et de récupérer éventuellement des informations supplémentaires stockées dans la mémoire des étiquettes RFID. Le lecteur détermine ainsi les identifications uniques de la ou les étiquettes mobiles et des marqueurs en couplage électromagnétique non nul et éventuellement des informations supplémentaires mises en mémoire par les marqueurs. Une table de codes d'identification est prévue dans le lecteur, associant les marqueurs à leurs emplacements dans le dispositif.

En l'absence d'étiquette mobile à proximité du réseau, aucun marqueur ne répond aux interrogations du lecteur puisque le couplage électromagnétique entre l'antenne AL du lecteur et les antennes AF des marqueurs est nul.

Mais en présence d'une étiquette mobile à proximité du réseau, un couplage indirect s'établit par l'intermédiaire de l'antenne AM de l'étiquette mobile : il y a une inductance mutuelle non nulle (en général) entre l'antenne AL du lecteur et l'antenne AM de l'étiquette mobile, et une inductance mutuelle non nulle (en général) entre l'antenne AM de l'étiquette mobile et au moins une antenne AF de marqueur. Il en résulte un couplage électromagnétique de fait entre l'antenne AL du lecteur et l'antenne de ce marqueur. Le couplage s'établit en principe avec le ou les marqueurs qui sont les plus proches de l'étiquette mobile. Dans certains cas exceptionnels le couplage peut ne pas s'établir, par exemple si le bobinage de l'antenne mobile est exactement superposé au bobinage de l'antenne d'un marqueur et reste donc symétrique par rapport à l'antenne du lecteur, mais cette probabilité concerne normalement des emplacements non prévus pour l'application. Pour étendre la couverture des emplacements possibles de l'étiquette mobile, on recourra à plusieurs groupes de marqueurs et antennes de lecture.

En raison de ce couplage, le lecteur reçoit une réponse à ses interrogations. Cette réponse inclut une identification du marqueur fixe qui est maintenant couplé ; elle peut inclure aussi une identification de l'étiquette mobile qui est également couplée à l'antenne du lecteur.

Il peut se faire que le couplage s'établisse avec plusieurs marqueurs voisins de l'étiquette mobile, en particulier si l'étiquette mobile est à peu près à égale distance de deux ou plusieurs marqueurs proches. Le lecteur pourra comporter un algorithme d'analyse et de décision pour déterminer la position probable de l'étiquette mobile par rapport au réseau en fonction des différentes réponses qu'il aura reçues.

On rappellera simplement la formule de calcul de l'inductance mutuelle $M_{12}$ entre deux antennes telles que l'antenne du lecteur, l'antenne d'une étiquette ou l'antenne d'un marqueur, en fonction de la configuration des conducteurs qui composent ces antennes (formule de Neumann) :

$$M_{12} = \frac{\mu_0}{4\pi} \cdot \int_{C1}\int_{C2} \frac{d\vec{\ell}_1 \cdot d\vec{\ell}_2}{d}$$

où $\mu_0$ est la permittivité de l'air, C1 et C2 désignent les configurations complètes des conducteurs de la première et la deuxième antennes respectivement, $dl_1$ et $dl_2$ représentent des tronçons élémentaires (vectoriels, donc tenant compte de leurs orientations signées) de conducteurs de la première et la deuxième antenne le long de ces configurations, et d la distance qui sépare ces tronçons. L'inductance mutuelle résulte d'une intégrale double pour tous les tronçons de chacune des deux antennes sur la totalité des circuits C1 et C2 ; chaque intégrale représente l'influence d'un tronçon d'une antenne sur tous les tronçons élémentaires de l'autre antenne en fonction de leur éloignement d par rapport au premier tronçon.

On constate d'après cette formule que deux tronçons élémentaires perpendiculaires ont une inductance mutuelle nulle car le produit scalaire des vecteurs représentant ces tronçons est nul. Egalement, deux tronçons élémentaires $dl_1$ et $dl'_1$ d'un premier circuit, symétriques par rapport à un tronçon élémentaire $dl_2$ d'un deuxième circuit et orientés en sens inverse l'un de l'autre engendrent des inductances mutuelles qui se compensent. D'où il résulte que l'inductance mutuelle entre un tronçon élémentaire du premier circuit et une boucle plane fermée du deuxième circuit est nulle si le tronçon élémentaire est placé dans un plan perpendiculaire au plan de la boucle si ce plan est un plan de symétrie divisant la boucle en deux parties symétriques.

De cette formule résulte notamment le fait que l'inductance mutuelle entre deux conducteurs linéaires perpendiculaires entre eux est nulle, que l'inductance mutuelle entre un conducteur linéaire et une boucle fermée est nulle si le conducteur est parallèle au plan de la boucle et est situé dans un plan de symétrie perpendiculaire au plan de la boucle et qui divise cette boucle en deux moitiés symétriques ; au contraire l'inductance mutuelle n'est pas nulle si le conducteur parallèle au plan de la boucle est situé dans un plan perpendiculaire au plan de la boucle mais qui divise la boucle en deux parties dissymétriques.

C'est la raison pour laquelle la figure 1 représente une configuration particulièrement simple de l'antenne AL du lecteur : elle est placée dans un plan qui est parallèle au plan des bobinages de toutes les antennes AF de marqueurs, et elle passe devant chaque antenne en restant dans un plan de symétrie du bobinage devant lequel elle passe. Cette configuration aboutit à une inductance mutuelle nulle et donc une absence de couplage électromagnétique entre l'antenne du lecteur et les antennes de marqueurs en l'absence d'étiquette mobile. Mais un couplage électromagnétique s'établit entre l'antenne de lecteur, l'antenne du marqueur, et l'antenne d'étiquette mobile, lorsqu'une étiquette mobile est à proximité du marqueur.

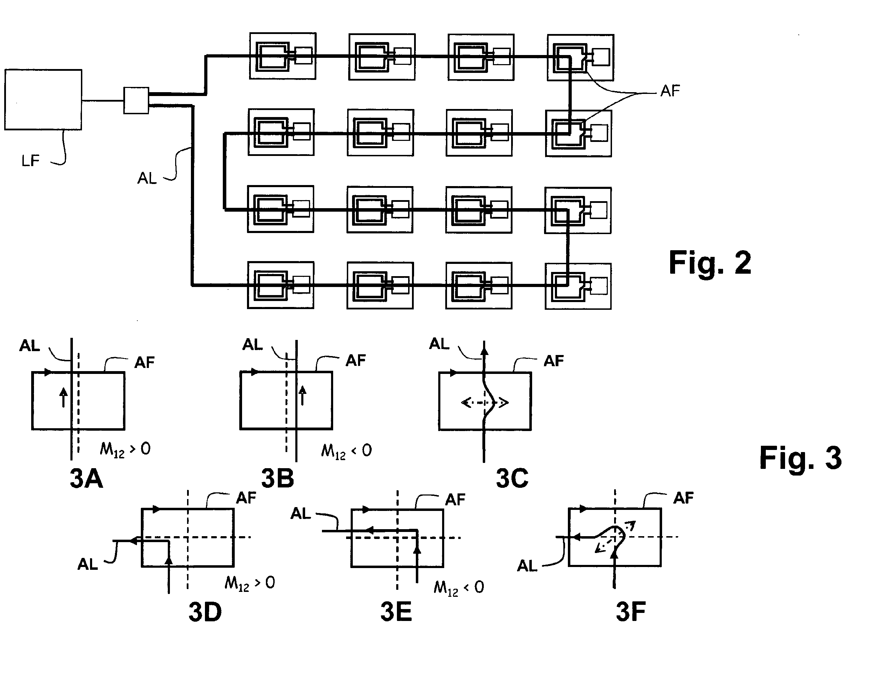

Dans la configuration de la figure 1, on a prévu que le centre des marqueurs se situe à chaque fois sur un tronçon linéaire d'antenne AL qui traverse tout droit l'antenne du marqueur. On pourrait prévoir aussi de centrer certaines antennes de marqueurs sur des points de bifurcation de la direction de l'antenne AL. La figure 2 représente une telle configuration : les antennes de marqueurs situés le plus à droite sont centrées sur des points de bifurcation de l'antenne AL. On notera que l'inductance mutuelle entre l'antenne AL et l'antenne AF à ces points reste nulle, si l'antenne AF reste symétrique par rapport à chacun des deux tronçons reliés au point de bifurcation. En effet, chacun des tronçons est placé individuellement dans un plan de symétrie du bobinage.

Il peut être nécessaire de prévoir d'ajuster la configuration relative de l'antenne AL et de l'antenne AF pour s'assurer que l'inductance mutuelle est aussi faible que possible. En effet, le calcul théorique aboutit aux conclusions qui ont été données plus haut en ce qui concerne la disposition théorique optimale des éléments les plus proches entre eux des configurations des conducteurs, mais en toute rigueur les éléments de conducteur de l'antenne de lecteur qui sont éloignés de l'antenne des marqueurs, sont à prendre en compte. Leur contribution à la mutuelle inductance reste faible compte tenu de la distance, mais au final l'inductance mutuelle peut ne pas être suffisamment faible. Dans ce cas, si on veut ajuster l'inductance mutuelle pour la rendre minimale, on peut agir en déplaçant ou en déformant légèrement les tronçons de l'antenne de lecture par rapport au bobinage des antennes des marqueurs.

La figure 3 donne à titre d'exemple des positions décalées (non symétriques) permettant d'augmenter ou de réduire l'inductance mutuelle $M_{12}$ entre deux éléments si elle n'était pas minimale dans la réalisation pratique. En 3A et 3B, le tronçon linéaire d'antenne de lecteur AL est décalé d'un côté ou de l'autre de sorte que ce tronçon ne soit plus confondu avec l'axe de symétrie de l'antenne du marqueur AF. En 3C le tronçon d'antenne de lecteur est déformé d'un côté ou de l'autre de l'axe de symétrie de l'antenne du marqueur. En 3D et 3E le conducteur AL avec bifurcation à angle droit est décalé par rapport à une position de symétrie. Enfin, en 3F les tronçons avec bifurcation sont déformés et sortent de la configuration symétrique qu'ils avaient à la figure 2.

L'effet de ces déformations peut être contrôlé par calcul, et un ajustement peut être effectué à la mise en place définitive du dispositif.

Sur les figures 1 et 2, on a considéré qu'il y avait une seule voie de lecture dans la communication RFID : il y avait un seul lecteur et une seule antenne de lecteur. On peut améliorer le fonctionnement en prévoyant plusieurs voies de lecture indépendantes établissant des communications RFID qui fournissent chacune leurs propres données de localisation. Les différentes voies peuvent ainsi fournir des informations complémentaires, mais, dans tous les cas, à chaque voie de lecture est associé un groupe de plusieurs marqueurs, avec la caractéristique que les inductances mutuelles entre les antennes de ces marqueurs et l'antenne de lecture sont nulles, de préférence un plus grand nombre de marqueurs par voie de lecture que le nombre de voies de lecture pour permettre de réduire significativement la complexité du dispositif par rapport à un dispositif qui aurait autant ou plus de voies de lecture qu'il y a de marqueurs dans tout le dispositif.

Les différentes voies de lecture comportent chacune une antenne de lecteur respective, mais les circuits associés, c'est-à-dire le lecteur RFID, peuvent être partagés, par exemple par multiplexage temporel, entre les différentes voies.

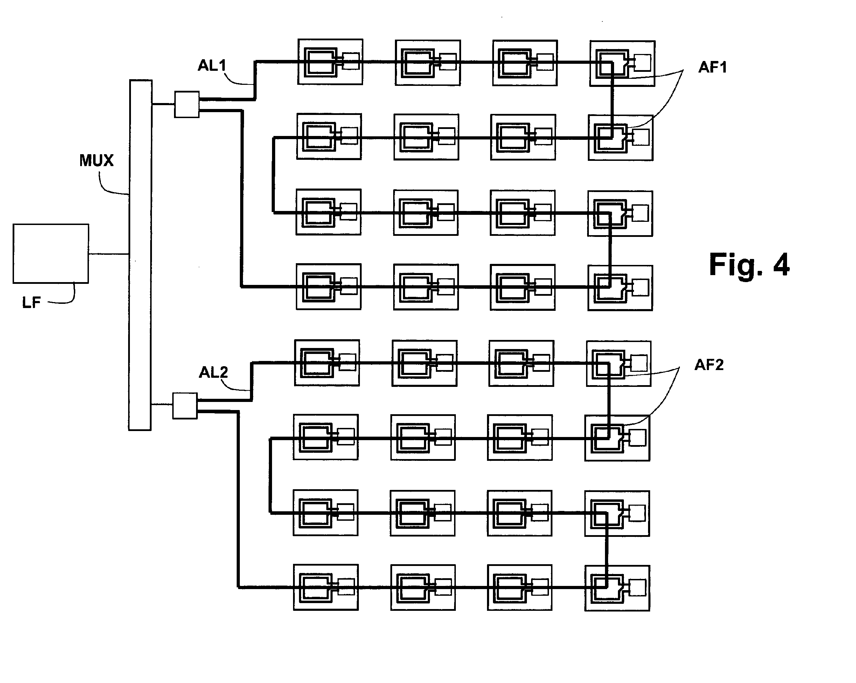

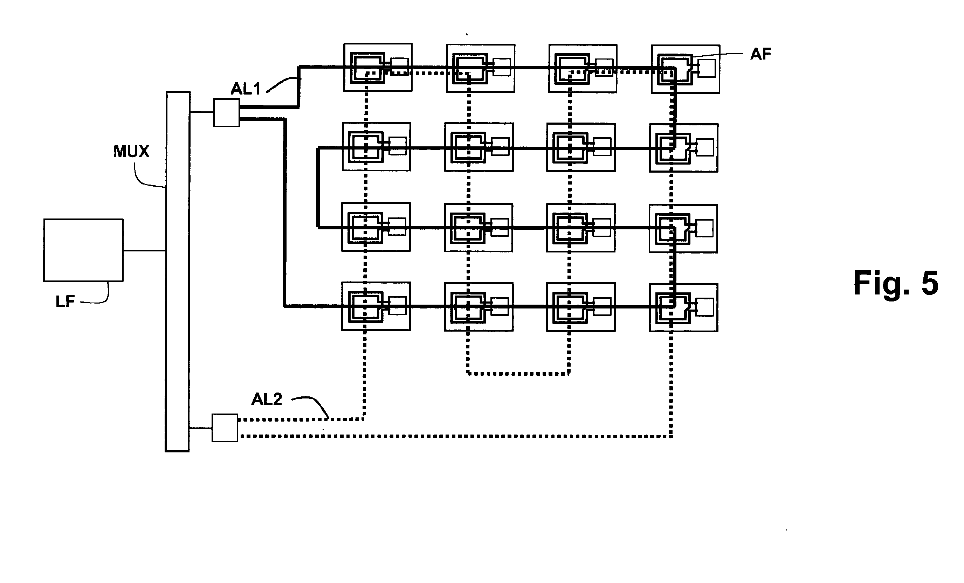

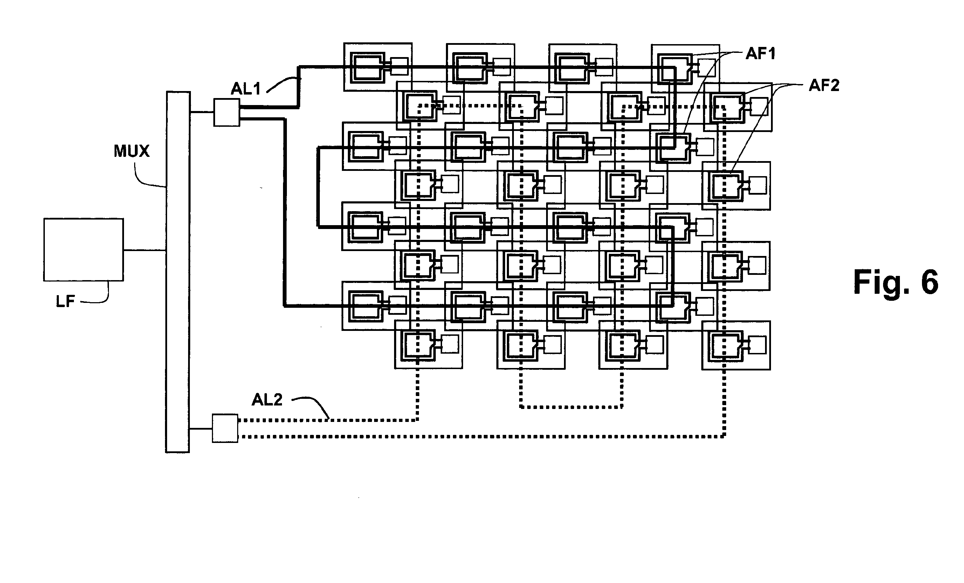

Les antennes de lecture AL1, AL2 des différentes voies peuvent être juxtaposées, dans une configuration telle que celle de la figure 4, ou encore imbriquées les unes dans les autres, dans une configuration telle que celle des figures 5 ou 6. Sur les figures 4 à 6 on a considéré pour simplifier qu'il n'y avait que deux voies de lecture (et un seul lecteur fonctionnant avec un multiplexage temporel pour communiquer alternativement avec chaque voie). On pourrait avoir un plus grand nombre de voies.

Dans la configuration de la figure 4, l'inductance mutuelle entre l'antenne de n'importe quel marqueur d'un groupe associé à une voie de lecture et l'antenne de lecture de cette voie est nulle.

Dans la configuration de la figure 5, les deux voies sont imbriquées et les mêmes marqueurs AF sont utilisés pour les deux voies. Il y a une antenne de lecture respective AL1 et AL2 pour chaque voie. L'inductance mutuelle entre n'importe quelle antenne de marqueur et l'une ou l'autre antenne des voies est nulle en l'absence d'étiquette mobile.

Dans la configuration de la figure 6, les deux voies sont imbriquées mais il y a deux groupes de marqueurs, chaque groupe étant associé à une voie de lecture (et donc une antenne de lecture respective). L'arrangement des marqueurs des deux voies est en quinconce. La deuxième antenne de lecture AL2 est représentée en pointillés. Il faut noter, dans ce cas de la figure 6, que les antennes des marqueurs associés à l'une des voies (associés en ce sens que leurs antennes sont en inductance mutuelle nulle avec l'antenne de lecture de cette voie) ne sont pas en inductance mutuelle nulle avec l'antenne de lecture de l'autre voie.

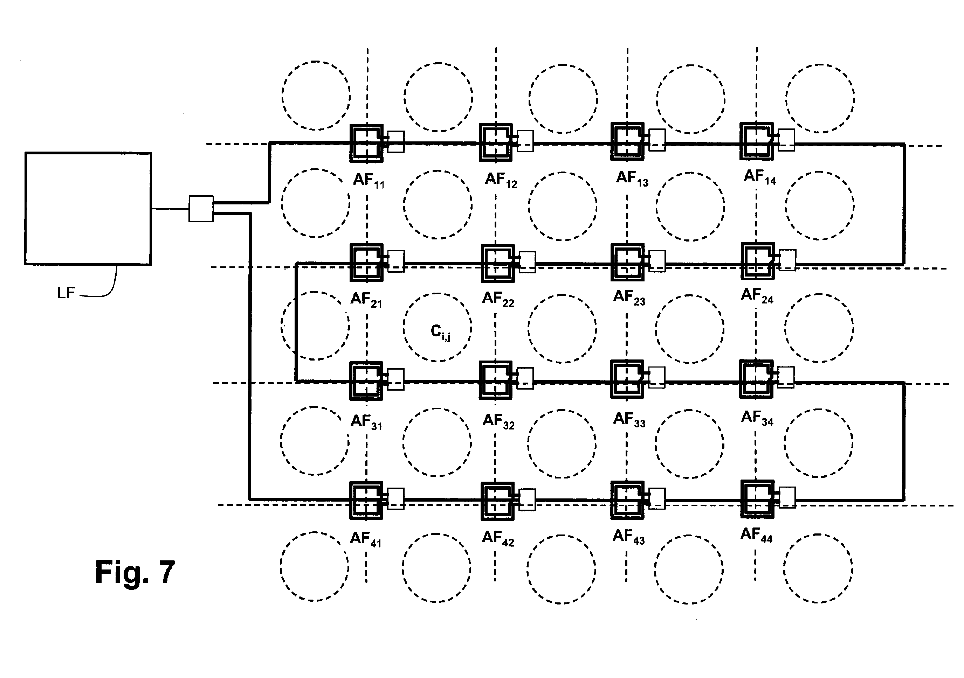

On comprendra que la détermination de la localisation d'une étiquette mobile dépend de la configuration choisie pour les antennes de la ou les voies de lecture et des marqueurs. Pour expliquer cette détermination, on se réfère par exemple au réseau simple de la figure 1, qui est repris à la figure 7. On peut définir un quadrillage de lignes (représentées en pointillés sur la figure 7) dont les points de croisement sont les N noeuds de réseau au centre des marqueurs ; les antennes des marqueurs sont étiquetées $A_{ij}$ où i est un indice de ligne et j est un indice de colonne, i et j variant de 1 à 4 dans ce cas où il y a N = 16 marqueurs. Le quadrillage définit des zones séparées par ces lignes pointillées perpendiculaires. Chaque zone est symbolisée par un cercle pointillé et représente une position possible d'un objet dont l'antenne d'étiquette associée (étiquette mobile) serait placée dans cette zone.

La détermination de position consiste à déterminer quelles sont les marqueurs qui réagissent à la présente de l'étiquette mobile parce que leur antenne est proche de l'antenne de l'étiquette mobile. Par exemple, si le lecteur RFID détecte une réponse des quatre marqueurs $AF_{21}$, $AF_{22}$, $AF_{31}$, $AF_{32}$, c'est la zone $C_{i,j}$ située entre les quatre antennes de ces marqueurs qui est considérée comme contenant l'objet.

Dans le processus de localisation, ce sont les marqueurs qui renvoient une donnée d'identification au lecteur à partir du moment où ils sont en couplage électromagnétique avec l'antenne de lecture du fait de la présence d'une étiquette mobile. Le lecteur établit un inventaire des identifiants des étiquettes mobiles et des marqueurs en couplage électromagnétique avec l'antenne de la voie de lecture concernée, par l'exécution d'interrogations successives. La localisation peut s'effectuer ainsi directement depuis cette liste de données d'identification. La localisation peut s'effectuer aussi de manière indirecte par l'intermédiaire de données supplémentaires fournies par les marqueurs à la demande du lecteur. Dans le premier cas, l'inventaire d'étiquettes RFID correspond à une opération classique des systèmes RFID. Dans le second cas, on peut prévoir que le marqueur est pourvu de moyens pour détecter la modulation de champ créée par l'étiquette mobile lorsque celle-ci envoie au lecteur sa réponse d'identification et pour décoder l'identifiant contenu dans cette réponse. Les marqueurs seront capables d'intercepter l'identifiant des étiquettes mobile avec qui ils réagissent. Ces données supplémentaires recueillies par les marqueurs peuvent être fournies au lecteur soit en combinaison avec les données d'identification des marqueurs, soit indépendamment à la demande du lecteur.

Dans un exemple de procédure, une voie de lecture envoie une commande spécifique adressée aux marqueurs (ou à une classe de marqueurs) en utilisant un protocole connu de ces marqueurs ; ceux-ci passent alors en mode d'écoute ; puis le lecteur envoie un message d'interrogation destiné aux étiquettes mobiles éventuellement présentes et reconnaissable par elles. L'étiquette mobile répond ; cette réponse est détectée et traitée par le ou les marqueurs.

Après l'identification des étiquettes mobiles et éventuellement des marqueurs en couplage électromagnétique non nul avec l'antenne de lecture (les identifiants de tous les marqueurs peuvent être connus par construction du dispositif), des échanges peuvent avoir lieu entre le lecteur et l'étiquette mobile ou les marqueurs, le protocole de communication étant alors un protocole avec adressage de l'étiquette mobile ou du marqueur, alors que dans le processus de localisation et d'information, le protocole est un protocole d'adressage général de toutes les étiquettes présentes et marqueurs éventuellement en couplage électromagnétique avec l'antenne de lecture.

On peut encore envisager que le système de localisation comprenne des moyens additionnels pour transmettre au lecteur une information de niveau de champ électromagnétique reçu par un marqueur. Cette information apporte un complément sur la proximité plus ou moins grande entre l'étiquette mobile et le marqueur qui est activé par l'étiquette mobile.

Le lecteur RFID lui-même peut comporter des moyens pour émettre différents niveaux de signal radiofréquence. Le nombre de marqueurs identifiés dépend alors du niveau, un marqueur pouvant ne répondre au lecteur qu'à partir d'un certain niveau de signal s'il est relativement loin de l'étiquette mobile qui le couple à l'antenne de lecture.

Dans le cas où on a plusieurs voies de lecture, avec par conséquent plusieurs antennes de lecture telles que AL1 et AL2, on pourra éventuellement prévoir des moyens pour réduire l'inductance mutuelle entre les deux antennes si le couplage électromagnétique résultant perturbe le bon fonctionnement du dispositif. Un tel découplage peut être effectué par une ouverture électrique du ou des circuits d'antenne qui ne sont pas actifs de manière qu'aucun courant ne circule dans ces circuits. Le découplage peut aussi être produit par un circuit de compensation qui relie inductivement les deux voies de lecture de manière à annuler le couplage existant naturellement. Concrètement, un transformateur peut être prévu, avec un primaire dans le circuit de l'une des antennes et un secondaire dans le circuit de l'autre antenne.

L'invention est applicable dans toutes sortes de circonstances. A titre d'exemple :

- pour des jeux qui utiliseraient des cartes, des jetons posés sur une table et devant être localisés automatiquement ;
- pour la localisation d'objets tels que des boîtes d'archives sur des étagères qui seraient équipées d'un réseau d'antennes fixes RFID jouant le rôle de marqueurs, alors que les boîtes seraient équipées chacune d'une étiquette RFID collée sur le fond ;
- pour la détermination de la position d'objets sur un présentoir linéaire de vente dans un magasin commercial ou une étagère dans un magasin de stockage.

## Revendications

1. Dispositif de localisation d'objets munis d'une étiquette RFID à antenne inductive (AM), le dispositif comprenant un réseau de N étiquettes RFID ou marqueurs fixes (EF) à antennes inductives (AM) et placés à des positions connues, N étant un entier supérieur à 1, **caractérisé en ce qu'**il comporte en outre un lecteur d'étiquettes RFID (LF) pourvu d'une antenne inductive de lecture fixe (AL) passant à proximité des N antennes des N marqueurs, la configuration de l'antenne inductive de lecture par rapport aux positions des N antennes des N marqueurs étant telle que l'inductance mutuelle entre l'antenne inductive de n'importe quel marqueur et l'antenne inductive de lecture est nulle.

2. Dispositif de localisation d'objets selon la revendication 1, **caractérisé en ce que** le réseau de marqueurs est organisé en lignes dont le tracé relie les centres des antennes des marqueurs, le réseau définissant des zones situées entre les lignes, et la localisation comprend la réception de données d'identification de plusieurs marqueurs dont les antennes encadrent une zone dans laquelle est placé l'objet.

3. Dispositif de localisation selon la revendication 2, **caractérisé en ce que** le réseau de lignes est organisé en lignes et colonnes régulièrement réparties.

4. Dispositif de localisation selon l'une des revendications 1 à 3, **caractérisé en ce qu'**il comporte au moins deux voies de lecture indépendantes comprenant chacune une antenne de lecture respective (AL1, AL2).

5. Dispositif de localisation selon la revendication 4, **caractérisé en ce que** les N marqueurs du réseau de marqueur sont divisés en groupes, chaque groupe étant associé à au moins une voie de lecture respective, les antennes des marqueurs d'un même groupe étant en inductance mutuelle nulle avec l'antenne de lecture de la voie de lecture associée à ce groupe.

**6.** Dispositif de localisation selon la revendication 5, **caractérisé en ce que** les configurations des antennes des voies de lecture délimitent dans un plan des aires se recouvrant en partie.

**7.** Dispositif de localisation selon la revendication 5, **caractérisé en ce que** les configurations des antennes des voies de lecture délimitent dans un plan des aires disjointes.

**8.** Dispositif de localisation selon l'une des revendications précédentes, **caractérisé en ce que** le lecteur RFID est apte à interroger les étiquettes RFID apposées sur des objets à localiser ainsi que les marqueurs, et apte à recevoir une identification de ces étiquettes RFID situées à proximité du réseau de marqueurs et une identification des marqueurs ayant un couplage électromagnétique non nul avec l'antenne de lecture du fait de leur couplage inductif non nul avec les étiquettes RFID.

**9.** Dispositif de localisation selon l'une des revendications 1 à 8, **caractérisé en ce que** les marqueurs sont aptes à détecter et analyser des informations d'identification des étiquettes.

**10.** Dispositif de localisation selon l'une des revendications 1 à 9, **caractérisé en ce que** les marqueurs sont aptes à retransmettre vers le lecteur une information relative à l'identification des étiquettes associées aux objets à localiser, avec lesquelles ces marqueurs ont un couplage inductif non nul.

**11.** Dispositif de localisation selon l'une des revendications précédentes, **caractérisé en ce que** le lecteur RFID est apte à fonctionner pour différents niveaux de champ radiofréquence.

**Claims**

**1.** Device for locating objects furnished with an electronic RFID tag with inductive antenna (AM), the device comprising an array of N fixed RFID tags (EF), or markers, with inductive antennas (AM), and placed at known positions, N being an integer greater than 1, **characterized in that** it furthermore comprises an RFID tag reader (LF) provided with a fixed reading inductive antenna (AL) passing in proximity to the N antennas of the N markers, the configuration of the inductive reading antenna with respect to the positions of the N antennas of the N markers being such that the mutual inductance between the inductive antenna of any marker and the inductive reading antenna is zero.

**2.** Device for locating objects according to Claim 1, **characterized in that** the array of markers is organized into rows passing through the centres of the antennas of the markers, the array defining zones situated between the rows, and the locating comprises the reception of identification data for several markers whose antennas bracket a zone in which the object is placed.

**3.** Locating device according to Claim 2, **characterized in that** the array of rows is organized into regularly distributed rows and columns.

**4.** Locating device according to one of Claims 1 to 3, **characterized in that** it comprises at least two independent reading pathways each comprising a respective reading antenna (AL1, AL2).

**5.** Locating device according to Claim 4, **characterized in that** the N markers of the marker array are divided into groups, each group being associated with at least one respective reading pathway, the antennas of the markers of one and the same group being in zero mutual inductance with the reading antenna of the reading pathway associated with this group.

**6.** Locating device according to Claim 5, **characterized in that** the configurations of the antennas of the reading pathways delimit partly overlapping areas in a plane.

**7.** Locating device according to Claim 5, **characterized in that** the configurations of the antennas of the reading pathways delimit disjoint areas in a plane.

**8.** Locating device according to one of the preceding claims, **characterized in that** the RFID reader is able to interrogate the RFID tags affixed to objects to be located as well as the markers, and able to receive an identification of these RFID tags situated in proximity to the array of markers and an identification of the markers having a nonzero electromagnetic coupling with the reading antenna on account of their nonzero inductive coupling with the RFID tags.

9. Locating device according to one of Claims 1 to 8, **characterized in that** the markers are able to detect and analyse identification information for the tags.

10. Locating device according to one of Claims 1 to 9, **characterized in that** the markers are able to retransmit towards the reader an item of information relating to the identification of the tags associated with the objects to be located, with which tags these markers have a nonzero inductive coupling.

11. Locating device according to one of the preceding claims, **characterized in that** the RFID reader is able to operate for various levels of radiofrequency field.

**Patentansprüche**

1. Vorrichtung zum Lokalisieren von mit einem RFID-Etikett mit induktiver Antenne (AM) versehenen Objekten, wobei die Vorrichtung ein Netzwerk von N festen RFID-Etiketten oder Markierungen (EF) mit induktiven Antennen (AM) umfasst, die an bekannten Positionen platziert sind, wobei N eine ganze Zahl größer als 1 ist, **dadurch gekennzeichnet, dass** sie darüber hinaus einen RFID-Etikettenleser (LF) umfasst, der mit einer festen induktiven Leseantenne (AL) versehen ist, die in der Nähe der N Antennen von N Markierungen verläuft, wobei die Konfiguration der induktiven Leseantenne mit Bezug auf die Positionen von N Antennen von N Markierungen derart ist, dass die Gegeninduktivität zwischen der induktiven Antenne jeder beliebigen Markierung und der induktiven Leseantenne null ist.

2. Vorrichtung zum Lokalisieren von Objekten nach Anspruch 1, **dadurch gekennzeichnet, dass** das Netzwerk von Markierungen in Leitungen organisiert ist, deren Verlauf die Mitten der Antennen der Markierungen verbindet, wobei das Netzwerk zwischen den Leitungen befindliche Zonen definiert und die Lokalisierung den Empfang von Daten zum Identifizieren von mehreren Markierungen umfasst, deren Antennen eine Zone umrahmen, in der sich das Objekt befindet.

3. Vorrichtung zum Lokalisieren nach Anspruch 2, **dadurch gekennzeichnet, dass** das Netzwerk von Leitungen in gleichmäßig verteilten Reihen und Spalten organisiert ist.

4. Vorrichtung zum Lokalisieren nach einem der Ansprüche 1 bis 3, **dadurch gekennzeichnet, dass** sie wenigstens zwei unabhängige Lesekanäle umfasst, die jeweils eine jeweilige Leseantenne (AL1, AL2) umfassen.

5. Vorrichtung zum Lokalisieren nach Anspruch 4, **dadurch gekennzeichnet, dass** die N Markierungen des Netzwerks von Markierungen in Gruppen unterteilt sind, wobei jede Gruppe mit wenigstens einem jeweiligen Lesekanal assoziiert ist, wobei die Antennen der Markierungen einer selben Gruppe in Gegeninduktivität null mit der Leseantenne des mit dieser Gruppe assoziierten Lesekanals sind.

6. Vorrichtung zum Lokalisieren nach Anspruch 5, **dadurch gekennzeichnet, dass** die Konfigurationen von Antennen von Lesekanälen in einer Ebene teilweise überlappende Flächen begrenzen.

7. Vorrichtung zum Lokalisieren nach Anspruch 5, **dadurch gekennzeichnet, dass** die Konfigurationen von Antennen von Lesekanälen in einer Ebene unverbundene Flächen begrenzen.

8. Vorrichtung zum Lokalisieren nach einem der vorherigen Ansprüche, **dadurch gekennzeichnet, dass** der RFID-Leser die an den zu lokalisierenden Objekten angebrachten RFID-Etiketten sowie die Markierungen abfragen und eine Identifikation dieser RFID-Etiketten, die sich in der Nähe des Netzwerks von Markierungen befinden, und eine Identifikation von Markierungen mit einer elektromagnetischen Kopplung von ungleich null mit der Leseantenne aufgrund ihrer Induktionskupplung von ungleich null mit den RFID-Etiketten empfangen kann.

9. Vorrichtung zum Lokalisieren nach einem der Ansprüche 1 bis 8, **dadurch gekennzeichnet, dass** die Markierungen Informationen zum Identifizieren von Etiketten erkennen und analysieren können.

10. Vorrichtung zum Lokalisieren nach einem der Ansprüche 1 bis 9, **dadurch gekennzeichnet, dass** die Markierungen eine Information über die Identifikation der mit den zu lokalisierenden Objekten assoziierten Etiketten neu zum Leser übertragen können, mit denen diese Markierungen eine Induktionskupplung von ungleich null haben.

11. Vorrichtung zum Lokalisieren nach einem der vorherigen Ansprüche, **dadurch gekennzeichnet, dass** der RFID-Leser für verschiedene Funkfrequenzfeldpegel funktionieren kann.

Fig. 1

Fig. 2

Fig. 3

EP 2 336 945 B1

Fig. 4

MUX

LF

AL1

AF1

AL2

AF2

Fig. 5

Fig. 6

**Fig. 7**

LF

AF$_{11}$  AF$_{12}$  AF$_{13}$  AF$_{14}$

AF$_{21}$  AF$_{22}$  AF$_{23}$  AF$_{24}$

C$_{i,j}$

AF$_{31}$  AF$_{32}$  AF$_{33}$  AF$_{34}$

AF$_{41}$  AF$_{42}$  AF$_{43}$  AF$_{44}$

## RÉFÉRENCES CITÉES DANS LA DESCRIPTION

**Documents brevets cités dans la description**

- FR 2891980
- FR 2907950
- US 20080278289 A
- US 20090085741 A
- WO 200845075 A
- WO 2009034526 A